Europäisches Patentamt

European Patent Office

Office européen des brevets

(11) Publication number: **0 031 565**
**B1**

(12) **EUROPEAN PATENT SPECIFICATION**

(45) Date of publication of patent specification: **11.09.85**

(51) Int. Cl.⁴: **B 01 D 59/42,** B 01 D 57/02

(21) Application number: **80108074.8**

(22) Date of filing: **19.12.80**

(54) **Method and apparatus of segregating at least one species of desired ions.**

(30) Priority: **31.12.79 US 108778**
**31.12.79 US 109003**

(43) Date of publication of application:
**08.07.81 Bulletin 81/27**

(45) Publication of the grant of the patent:
**11.09.85 Bulletin 85/37**

(84) Designated Contracting States:
**AT BE CH DE FR GB IT LI NL SE**

(56) References cited:
**US-A-2 563 729**
**US-A-2 678 300**
**US-A-3 485 737**

(73) Proprietor: **THE REGENTS OF THE UNIVERSITY OF CALIFORNIA**
**2199 Addison Street**
**Berkeley California 94720 (US)**

(72) Inventor: **O'Farrell, Patrick H.**
**Dept. Biochemistry, USF**
**San Francisco, Cal., 94 133 (US)**

(74) Representative: **Splanemann, Rainer, Dipl.-Ing. et al**
**Patentanwälte Dipl.-Ing. R. Splanemann, Dr. B. Reitzner Tal 13**
**D-8000 München 2 (DE)**

## Description

This invention relates to a method of segregating, i.e. separating, purifying and/or concentrating at least one species of desired from ions in a mixture of ionic species; and, according to one embodiment, to a novel method of isotope purification and/or enrichment.

More particularly, this invention relates to a combination of electrophoresis and a flowing carrier fluid.

The principles of electrophoresis are known whereby separation of a mixture of ions can be effected by an applied voltage field since different species will migrate toward an oppositely charged electrode at different rates proportional to their charge to mass ratio. It is also known that particular hydrated supports or matrices can have an influence on electrophoresis rates and can be used in conjunction with electrophoresis to effect the separation of ions according to physical properties other than their charge to mass ratio. In addition, a specialized technique is known, in which an electric potential forces complex polyionic molecules to their isoelectric point in a pH gradient.

Eletrophoresis is typically used as an analytical tool in biochemical research. When used in this manner, electrophoresis separates components of a mixture and allows certain measurements, e.g. quantification, of the separated components. Usually analytical electrophoresis methods do not include the recovery of the separated components, i.e. the species are both separated and measured in the separation medium and the separated components are recovered only as a mixture or not at all. Several electrophoretic techniques have been developed for preparative use, i.e. to recover the separated components. The simplest of the preparative electrophoresis systems operates on the same principles as the analytical methods, wherein a zone containing a mixture of ion species is applied at the origin and the ions are electrophoresed into or through a supporting matrix whose major importance is to prevent turbulent mixing, i.e. as an anti-convection medium. These techniques include a method for recovering the different ions which are separated by virtue of differing rates of electrophoresis through the supporting matrix. U.S.—A—No. 3,847,785 is illustrative of such techniques.

These techniques are extremely limited in that they have a very low capacity. Further, because electrophoresis cannot be done at high concentrations of ionic components and because electric heating limits the size of the apparatus, such techniques cannot advantageously be operated on a large scale basis. Moreover, the sample must be in a concentrated form, while recovered isolated components are generally very dilute. Finally, such techniques have the added disadvantage of very limited resolution, i.e. poor capacity to separate two or more very similar components.

Methods of continuous electropheresis are known in which electrically charged species are continuously fed into an apparatus and are segregated by application of a direct current perpendicular to the flow of a carrier solution. Each charged component moves in a particular direction defined by its rate of electrophoresis in one direction and the rate of which it is carried by the bulk solution flow in the perpendicular direction. Components can thus be collected continuously from the position of zones on the downstream end of the apparatus (see e.g. Ravoo, Gellings and Vermculen, Anal. Chim. Acta 38 (1967) 219—232). By virtue of allowing continuous operation, these techniques have increased the capacity of electrophoretic techniques. However, despite this increase, the capacity is still low, while the other disadvantages of electrophoresis, e.g. poor resolution, remain. Additionally, these continuous electrophoresis processes cannot be adapted to very large scale operation because of inadequate heat dissipation.

Other methods of continuous electrophoresis are described in U.S.—A—No. 2,563,729 and 2,678,300, where the directions of carrier fluid flow and electrophoresis are directly imposed rather than perpendicular. These methods rely on the use of a liquid-liquid boundary formed by superimposed fluids of different electrical conductivity. The position and sharpnes of the boundary are maintained by flowing an electrolyte through the system in the direction opposite to that of the electrophoresis force. A disadvantage of these methods is that close adjustment and accurate control of the feed rate are essential in preventing the liquid-liquid boundary from dissipating and migrating. A further disadvantage is that these methods permit the isolation of only one species from the feed mixture.

Also known is a mode of electrophoresis referred to an isotachophoresis or displacement electrophoresis which was developed following the principles described by Ornstein in U.S.—A—3,384,564. According to these principles, under particular conditions, an ion of intermediate electrophoretic mobility can be "sandwiched" between an ion with higher electrophoretic mobility and one of lower electrophoretic mobility. Isotachophoresis has the advantage of providing a force which counteracts diffusion and also can concentrate the separated components. However, several problems have been encountered in attempts to apply the method of isotachophoresis. In the absence of spacer ions, the different separated zones of a mixture border on each other and are thus difficult to recover without contamination from adjacent components. Spacer ions must possess very particular properties and thus are not always available. To obtain adequence separation and components must be electrophoresed a considerable distance which demands a high voltage. Also isotachophoresis has a limited capacity.

A method has been described (Preetz and Pfeifer, Anal. Chim. Acta 38 (1967) 255—260) in which bulk fluid flow counteracts isotachophoresis. The purpose of this counter flow is that isotachophoresis can continue for a long time in a small chamber or column. This decreases the power requirements as disclosed in U.S.—A—3,705,845. Furthermore, bulk fluid flow perpendicular to direction of isotachophoresis has been used to give a continuous method analogous to that described for electrophoresis above.

In a special field, viz. in radiochemical industry, methods of purifying radioactive isotopes (also stable isotopes with unusual mass) from the more abundant chemically identical isotopic forms are required. Most importantly, a large industry is involved in the enrichment of the isotope uranium-235 from natural uranium. To be used for powering nuclear reactors, the uranium-235 content is typically increased from 0.71 percent to 3 percent. Similarly, large scale enrichment plants exist for the isolation of the stable heavy isotope of hydrogen, deuterium, which is used in heavy water-cooled nuclear reactors.

Known processes for enrichment of uranium in the fissionable isotope uranium-235 include gaseous diffusion processes and gas centrifuge processes. Typically, such processes are multistage and involve significant capital outlay for equipment. Also, gaseous diffusion suffers from the disadvantage that large energy expenditures are required to achieve enrichment. Furthermore, because the enrichment achieved in any one step is small, a large multiunit plant is required. Additionally, the low enrichment levels make it impractical to recover more than a fraction of the uranium-235.

Gas centrifugation requires the design of a centrifuge having the fastest and longest rotor possible, since separation increases with speed and is proportional to length. However, the level of materials technology and engineering, in general, impose practical limits on the size and speed of the rotors. The limit of the length of the machine is determined in part by the difficulty of controlling the straighness of the rotor, the uniformity of the wall in mass production manufacture, and by the durability of the bottom bearing, which must support the weight of the rotor. Another disadvantage of the centrifuge is that those with large length to diameter ratios have a problem getting up to operational speed, since they may pass through critical speeds at which large scale vibrations can occur. These problems are compounded by the fact that typically, three or more centrifuges are utilized in series as a "cascade".

Thus, although the gas centrifuge requires substantially less energy than gaseous diffusion, establishment of plants requires a large capital outlay and their maintenance involves high costs.

Another more recently developed method of isotope separation is laser separation which utilizes the differences in the electronic structure, i.e. in the electron clouds that surround the nuclei, of isotopes. The differences, though small, affect the wavelengths of light absorbed by the isotopes. Because a laser emits light of a very pure color, it can thus be utilized to "tag", i.e. excite the electrons of, one isotope but not the other. Once the various isotopes are distinguished a variety of methods are then available for actually sorting them into different "bins". For example, application of an electric or magnetic field may be used to deflect the excited isotope along a different path from that followed by the unexcited one. Alternatively, the excited isotopes may be converted into ions which are more easily manipulated.

Still other classes of laser separation decompose molecules containing one isotope into stable products that can be simply removed from the mixture or utilize chemical scavengers which will react only with a molecule in its excited state. In addition to the similar disadvantage of the other laser techniques, i.e. requiring specialized and costly equipment, these techniques have the added difficulty of finding compounds which decompose into stable components or of finding appropriate scavenger molecules. The laser separation techniques have considerable potential but these have yet not been fully developed. These laser techniques all suffer from the disadvantage of retrieving only a small proportion of the available isotope. Thus, these techniques will require multiple stages with the accompanying reduction in efficiency and furthermore are unlikely to achieve complete recovery of the rarer isotope.

Accordingly, there is a need for a technique for isotope separation which has a high capacity and high degree of enrichment per stage, which recovers the large majority of the desired isotope, and which does not require large sophisticated equipment.

In its general aspect, the invention comprises a novel method of segregating at least one species of desired ions from a mixture of ionic species comprising the steps of:

introducing said mixture into a separation chamber having longitudinally varying separation characteristics provided by either (a) a gradient matrix having continuously varying medium characteristics or (b) a series of at least two contiguous matrices each of uniform medium characteristics but differing with respect to each other;

imparting to said mixture a movement in a first direction by flowing a carrier fluid through said chamber; and

applying an electrical field across said chamber to electrophorese said desired ions in a second direction having a component counter to said first direction to segregate each of said species of desired ions in an equilibrium zone, at least one such zone abutting the common boundary of said matrices when contiguous matrices of uniform characteristics are present.

Further embodiments of the invention are recited in the subclaims.

The method of the present invention comprises a combination of electrophoresis, a counter flowing carrier fluid and a separation chamber having a matrix of porous or granular material with longitudinal varying separation characteristics to produce equilibrium positions to which particular ions move. According to the present invention, by selecting the appropriate carrier fluid flow rate, the magnitude of the applied electric field, i.e., the current, and the varying separation characteristics in the matrix, one or more similarly charged species of ions can be segregated into separate or discrete equilibrium zones within the chamber.

The method of the present invention is based on the simple principle that the movement of a given ion can be in the direction of flow or in the direction of electrophoresis, and that due to the varying separation characteristics movement due to flow can dominate in one zone of the matrix and movement due to electrophoresis can dominate in a second zone adjacent to the first. Applying this principle to isotopes, the electrophoretic force for a given desired isotope will slightly exceed the opposing force due to the carrier fluid flow in one zone, while the opposite will be true in an adjacent zone. These zones may arise either from a single matrix of continuously varying character, or from a series of discrete matrices (or compartments of a matrix), each of uniform character but different from each other. Thus, conditions can be selected such that a given ion will move either toward a single plane perpendicular to the direction of variation in the case of a continuously varying matrix, or toward the interface of two regions in the case of a matrix with discrete but internally uniform regions to be concentrated at the plane or interface while impurities will be washed through the system. Such regions of the separation chamber possess a unique combination of separation characteristics.

In the case of discrete but internally uniform matrix regions, each region is defined by a unique matrix or particular combination of matrices (granular or porous materials through which a solvent can flow) which by virtue of interactions with ions within the separation chamber establish particular separation characteristics. In a second type of embodiment the electrical potential (voltage) across different regions of the separation chamber differs. In a third type of embodiment the rate of fluid flow through different regions differs. The first of the above methods (that using one or more matrices) is particularly practical for large scale applications and is described in detail below.

The method of the present invention proceeds by introducing a sample of a mixture of different molecular species (e.g. a mixture of isotopes) into a separation chamber having longitudinally varying separation characteristics in the form of at least two regions, flowing a carrier field through the chamber and applying an electric field across the chamber such that the ions to be separated or collected electrophorese in a direction counter to the flow of the carrier fluid. Typically, one region will comprise a uniform support matrix or a volume of free flowing carrier fluid. Alternatively, a non-uniform or gradient support matrix may be utilized, such matrix providing a multiplicity of regions. The flow rate and the electric field strength are selected so that the species to be separated have a net mobility of substantially zero at some position in the chamber, e.g. in two contiguous regions the ions move toward the common boundary and have a net mobility of zero in an equilibrium zone at and adjacent the boundary.

In one embodiment, one region of the separation system comprises a matrix of a type in which, at suitable flow rates and applied voltages, i.e., current, the movement of the species of desired ions due to electrophoresis is slightly faster than their movement due to flow in the opposite direction, i.e. the ions migrate slightly faster in the direction of electrophoresis than in the opposite carrier fluid flow direction. A region of the separation system contiguous to the first in the direction of electrophoresis comprises a second matrix in which the desired ions move due to flow slightly faster than they move due to electrophoresis. Under the appropriate flow rate and applied voltage, the result of the imbalances in the movements due to electrophoresis and due to flow is that the desired ions migrate to the common boundary of the two compartments, i.e. of the two matrices, and are concentrated there in a discrete equilibrium zone while impurities are washed through the system.

The separation system of the present invention provides a high resolution method for purifying desired ions and, importantly, can be used for large scale amounts and/or on a continuous basis, while providing relatively comparably high resolution coupled with high capacity and sufficient flexibility to be generally applicable for a wide range of separation requirements.

The present invention is further illustrated by the following drawings in which:

Fig. 1 is a graph depicting the direction and rate of net movement (Ri) of an ion as a function of the current (a) and flow rate (dv/dt).

Fig. 1A is a graph depicting the direction of net movement of an ion as a function of the ratio a:dv/dt on a particular matrix.

Fig. 2 is a fragmentary, elevational, sectional view, taken along a vertical axis of an electrophoresis apparatus for carrying out an embodiment of the method according to the invention which utilizes two uniform support matrices;

Fig. 3 is a fragmentary, elevational, sectional view taken along a vertical axis of an electrophoresis apparatus for carrying out another embodiment of the method according to the invention which utilizes a gradient support matrix;

Fig. 4 is an elevational, sectional view, taken along a vertical axis of an apparatus for carrying out another embodiment of the method of the present invention;

Fig. 5 is a schematic representation of another embodiment;

Fig. 6 is a perspective view of an embodiment of the Fig. 5;

Fig. 7 is a cross-sectional view of the embodiment depicted in Fig. 6 taken along line 8—8;

Fig. 8 is a fragmentary, elevational sectional view taken along a vertical axis of an apparatus similar to that of Fig. 2 and useful in a method of separating uranium-235 from uranium-238;

Fig. 9 is a fragmentary, elevational, sectional view taken along a vertical axis of an apparatus useful in a method of separating uranium-235 from uranium-238.

The electrophoretic mobility of an ion is proportional to the charge to mass ratio of that ion and by the method of the present invention it is possible to separate different ions or isotopes on the basis of their differing mass. For example, an ionic form of uranium, the uranyl ion, would have about a 1 percent higher electrophoretic mobility if made from the lighter isotope, uranium-235, than if made from the heavier form, uranium-238. This difference in mobility allows separation.

The present invention utilizes the influence of the applied voltage and carrier fluid flow on an ion to effect separation. Ions, such as uranium ions, in solution or suspension will migrate in an electric field at a rate $R_e$ (distance traversed per unit time) determined by (a) the electrical current, a, (amperes); (b) the electrical resistance of the carrier fluid, r; (c) the reciprocal of the cross sectional area of the separation chamber, 1/A; (d) the influence of the separation medium on electrical resistance, Ce; (e) the electrophoretic mobility Me of the ion (proportional to the total charge of the ion and inversely proportional to its total molecular weight); and (f) by physical characteristics of the medium through which the ions must migrate, usually expressed as $k_e$ (the factor by which a particular medium influences the electrophoretic mobility of a particular ionic species.) The rate of movement due to electrophoresis $R_e$ is represented by the formula:

(1) $\qquad R_e = a \cdot r \cdot 1/A \cdot Ce \cdot Me \cdot k_e$

Similarly, the ions in solution or suspension will move, when the carrier fluid is made to flow, at a rate, $R_f$ (distance traversed per unit time), determined by (a) the rate of flow of the entire solution, $dv/dt \cdot 1/A$ (the volume of solution flowing past a point over the time interval dt divided by the cross sectional area, A, of flow) and (b) the physical characteristics of the medium through which the ions must move, $k_f$ (the degree to which a particular medium influences the movement due to flow of a particular ion). The movement due to flow $R_f$ is represented by the formula:

(2) $\qquad R_f = dv/dt \cdot 1/A \cdot k_f$

In the process of the present invention, the movement of a given ion due to electrophoresis is counterbalanced by its movement due to flow in the opposite direction. In addition, a heterogeneous medium which has varying separation characteristics, results in an equilibrium force which counteracts diffusion and concentrates the desired ion in an equilibrium zone. The terms r, 1/A, Ce, Me, $k_e$, and $k_f$ are referred to as separation characteristics. The terms Ce, $k_e$ and $k_f$ are also referred to as medium characteristics. In addition, in accordance with the principles described below, the present invention provides a separation chamber with varying separation characteristics, i.e. divides the separation chamber into different compartments or regions, and produces an equilibrium force by taking advantage of the fact that differing separation characteristics, can have different influences on the rate of electrophoresis ($R_e$) and on the rate of flow ($R_f$), e.g. by utilizing two matrices which have different values for $k_e$, Ce and $k_f$.

As can be seen from formula (1) the rate of movement due to electrophoresis, $R_e$, can be varied independently by varying the applied voltage, i.e. regulating the amount of electrical current, a, put through the separation chamber. Similarly, in formula (2) the rate of movement due to flow, $R_f$, can be independently varied by varying the rate of carrier fluid flow, dv/dt. The dependence of $R_e$ on the current, a, is linear if other parameters are constant, i.e. the ion species and the separation characteristics. Similarly, the dependence of $R_f$ on the rate of flow of the carrier fluid is linear when other parameters are constant, i.e. the separation characteristics, the chamber cross-sectional area, the ion species and the carrier fluid.

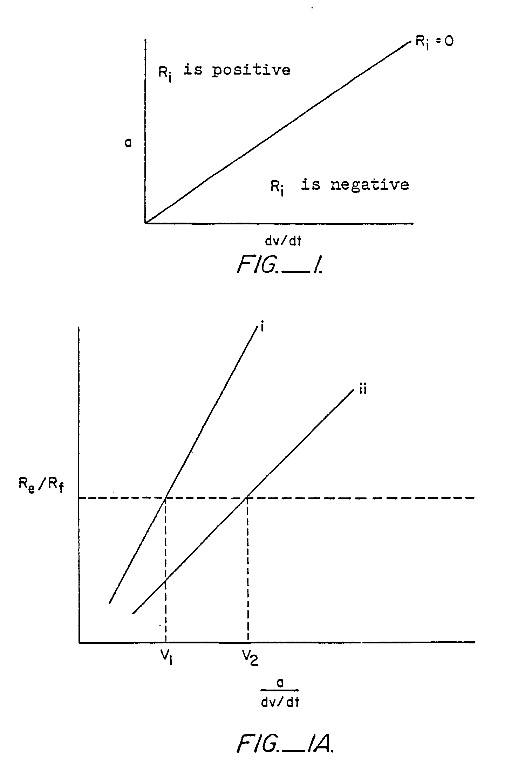

In each compartment n=i, ii, iii, etc. a given ion will have a net mobility $R_n$ equal to the sum of its rate of movement due to electrophoresis, $R_e$ (defined as in the positive direction) and its rate of movement due to flow, $R_f$. For example, in compartment i the net mobility $R_i$ is equal to $R_e - R_f$ (minus because flow and electrophoresis are counter-directional). If movement due to electrophoresis dominates then $R_i$ is positive while if movement due to flow dominates $R_i$ is negative. Since both $R_e$ and $R_f$ can be adjusted independently, $R_i$ can be made to be positive, zero or negative (Fig. 1).

An alternate way of expressing this is, if $R_i$ is positive, then $R_e:R_f > 1$, if $R_i$ is negative, $R_e:R_f < 1$, and if $R_i$ is zero then $R_e:R_f = 1$. This absolute ratio of $|R_e:R_f|$ varies in proportion to the ratio of a:dv/dt, as depicted in Fig. 1A. The direction of net movement of an ion is dependent on the separation characteristics, as well as on the ratio of a:dv/dt. Where two matrices are selected which do not have the same $k_e$, Ce and $k_f$, a given ion will have a different net mobility, $R_n$, in the different matrices in the separation chamber despite the same values of a and dv/dt. Thus in Fig. 1A two curves are given: one for a matrix i and one for a matrix ii.

Typically, when two matrices are used in one separation chamber, the same electric current and the flowing solvent pass through both matrices. Thus, although $a:dv/dt$ can be varied, it typically will only have one value at a time for one separation chamber and thus is the same for all compartments of the chamber, e.g. matrix i and matrix ii. It can be seen from Fig. 1A, at all values of $a:dv/dt$ between $V_1$ and $V_2$, the net mobility of the given ion will be in opposite directions in matrix i and matrix ii. Thus, if the two matrices are positioned such that the matrix in which the net mobility is negative is placed contiguous to and in the direction of electrophoresis with respect to the matrix in which the net mobility is positive, then the ion will migrate toward the common boundary of the two matrices. The ion will concentrate adjacent the boundary of these matrices and will form an equilibrium zone. An equilibrium zone is defined as that region of the separation chamber in which a particular species is concentrated and has a net longitudinal movement of substantially zero. The details of the conditions within the equilibrium zone are described below (section entitled: Equilibrium Zones).

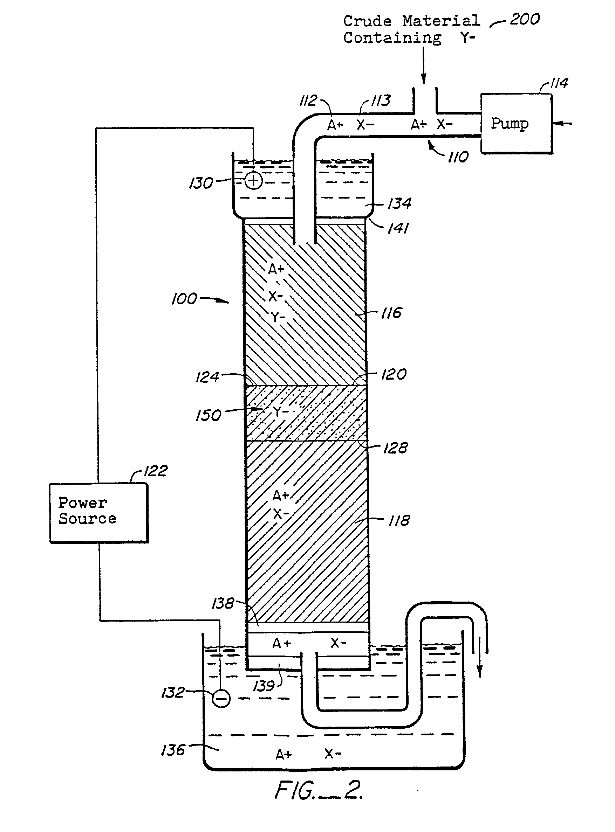

Fig. 2 illustrates one embodiment of the present invention in which two regions comprising two different matrices 116, 118 are utilized to produce longitudinally varying medium characteristics in a separation chamber 100. The medium characteristics, applied voltage and rate of carrier fluid flow produce dynamic equilibrium conditions for given preselected $Y^-$ ions 120. By dynamic equilibrium conditions for a species of ion is meant conditions in a separation system the effect of which is that a particular species of ion remains stationary at the position in the system where those conditions exist, i.e. the ion concentrates in an equilibrium zone. Any pump 114 capable of maintaining a constant output may be utilized to pump the carrier fluid through the separation chamber 100. The pumping rate chosen is as dictated by the separation requirements. That is, the movement due to flow (equation 2) is proportional to the pumping rate which can be selected to give dynamic equilibrium conditions, for the desired ions.

The separation chamber 100 can be of almost any form as demanded by the particular separation technique. Although simple changes in the shape of a separation chamber can produce gradients in the voltage field and fluid flow rates, it should be noted that these trivial changes cause parallel changes in both the rates of movement due to flow and movement due to electrophoresis and do not produce the variation in the ratio of these rates required to implement the present invention. The material contacting the solution 110 is typically a non-conductor of electricity. The chamber 100 is usually closed, except for exit ports which may be disposed at any point along the chamber 100 for convenient removal of desired ions at their position of dynamic equilibrium, i.e. at the position of about zero net mobility. The chamber 100 is impermeable to the solution 110 so that constant fluid flow can be maintained. A preferred separation chamber 100 is a vertical cylindrical chamber (column), typically of glass or suitable plastic. A transverse disc or mesh 138 at the bottom of the column 100 supports the matrices 116, 118 which longitudinally fill the cavity of the column 100. This disc 138 allows the carrier fluid to flow and ions to move. Preferably, the electrodes 130, 132 are isolated from the separation chamber 100 by having the electrodes 130, 132 contact the solution 110 in reservoirs 134, 136 which are connected to the separation chamber 100 by a liquid contact 139, 141 such as a membrane barrier or matrix (different from the support matrices discussed above) which resists fluid flow but does not resist the electric current flow, i.e. the flow of ions, through the solution.

A carrier fluid 110 containing $A^+$ ions 112 and $X^-$ ions 113 pumped by a pump 114 flows down through a first support matrix 116 of type i, then through a second support matrix 118 of type ii. Under the configuration depicted in Fig. 2 matrix i 116 is positioned above matrix ii 118, the movement of $Y^-$ ions 120 due to flow is downward, and the movement of $Y^-$ ions 120 due to electrophoresis is upward. In this embodiment the matrices i, ii are chosen such that $Ce \cdot k_e/k_f$ for matrix i 116 differs from $Ce \cdot k_e/k_f$ for matrix ii 118. As an example, in a matrix i having $Ce_i \cdot k_{ei}$ equal to $Ce_{ii} \cdot k_{eii}$ of matrix ii, and having a $k_{fi}$ equal to twice that for matrix ii ($k_{fii}$), the electrophoresis rate of $Y^-$ ion 120 is the same in matrix i 116 and matrix ii 118 ($R_{ei} = a \cdot r \cdot 1/A \cdot Ce_i \cdot Me \cdot k_{ei} = R_{eii} = a \cdot r \cdot 1/A \cdot Ce_{ii} \cdot Me \cdot k_{eii}$). However, the flow mobility of $Y^-$ ion 120 in matrix i 116 ($R_{fi}$) is twice the flow mobility ($R_{fii}$) in matrix ii 118 ($dv/dt \cdot 1/A \cdot k_{fi} = dv/dt \cdot 1/A \cdot 2 \times k_{fii}$). That is, even through the carrier fluid 110 is flowing at the same rate ($dv/dt \cdot 1/A$) in matrix i 116 and ii 118, the $Y^-$ ion 120 flows at twice the rate in matrix i 116 ($R_{fi}$) as it does in matrix ii 118 ($R_{fii}$). Thus, when a voltage applied by a power source 122 is chosen so that the electrophoresis rate for $Y^-$ ion 120 in both matrices (since $R_{ei} = R_{eii}$) is less than $R_{fi}$ but greater than $R_{fii}$ ($R_{fi} > a \cdot r \cdot 1/A \cdot Ce \cdot Me \cdot k_e > R_{fii}$), then the movements of $Y^-$ ions 120 due to electrophoresis and due to flow are imbalanced in both support matrix i 116 and ii 118. In matrix i 116 the movement due to flow ($R_{fi}$) dominates, $R_{fi}:R_{ei}$ is greater than 1, and the net downward movement is $R_{fi} - a \cdot r \cdot 1/A \cdot Ce \cdot Me \cdot k_e$. In matrix ii 118 the movement due to electrophoresis dominates, i.e. $R_{fii}:R_{eii}$ is less than 1, and the net upward movement is $a \cdot r \cdot 1/A \cdot Ce \cdot Me \cdot k_e - R_{fii}$. As a result, the $Y^-$ ions 120 concentrate at the boundary 124 of the two matrices 116, 118 and are prevented from diffusing away because the described forces return the $Y^-$ ions 120 to the boundary 124. The only ions which will concentrate at the boundary are those for which $R_i$ (the net mobility in matrix i) is negative and $R_{ii}$ (the net mobility in matrix ii) is positive. Thus, $Y^-$ ions 120 are separated from impurities by choosing conditions such that $Y^-$ ions 120 satisfy these conditions and the impurities do not.

When the segregation of $Y^-$ ions 120 is completed, the purified $Y^-$ ions are removed from the chamber by interrupting the applied voltage, i.e. current through the chamber. As carrier fluid 110 continues to flow the zone of $Y^-$ ions 120 will move down the column and may be collected by any conventional collection means known in the art, e.g. a fraction collector which collects successive volumes of the eluting fluid in different test tubes.

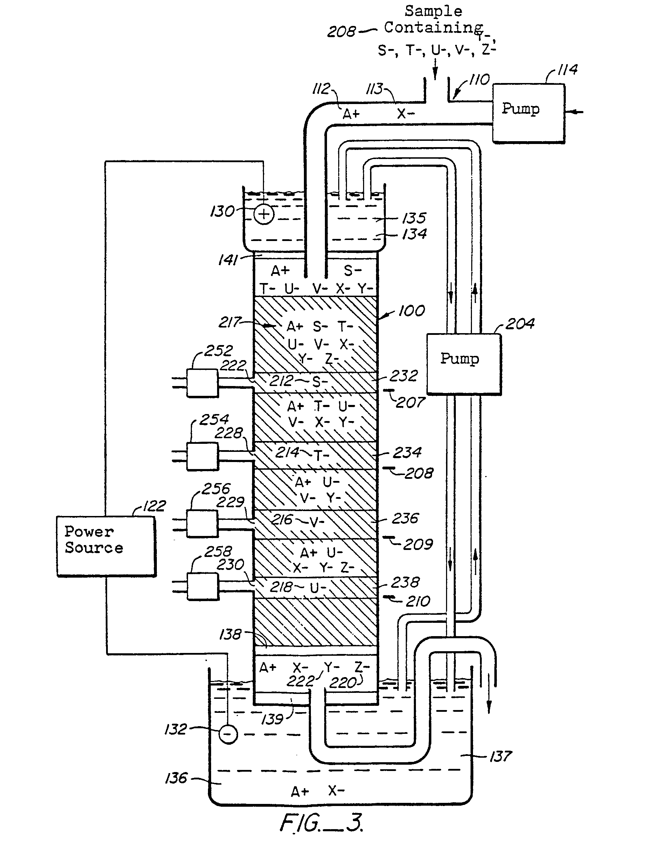

Fig. 3 illustrates an alternative embodiment of the invention in which equilibrium points for a plurality of ions are established using a non-uniform or gradient support matrix 217, e.g. two or more different support media combined in different proportions to produce a continuously varying gradient of their separation medium characteristics. For example, two support matrices having $k_f = a$ and 2a may be combined to form a multiplicity of contiguous regions producing a gradient of $k_f$ from a to 2a. The carrier fluid is then made to flow through the gradient and a sample 208 containing a mixture of different ions is added to the system. In the instant example, only those ions with electrophoresis rates $(R_e)$ between $dv/dt \cdot 1/A \cdot a$ and $dv/dt \cdot 1/A \cdot 2a$ achieve equilibrium. Different ions which satisfy these boundary conditions will have equilibrium points at different locations, i.e. positions of the varying medium characteristics, in the gradient, (in different regions), and therefore the ions separate out in different discrete zones, each at its particular equilibrium position in the gradient, i.e. in the region at which the dynamic equilibrium conditions for that species of ions exists.

In Fig. 3, as in Fig. 2, flow is downward and electrophoresis movement of the desired ions is upward. A sample 208 containing $S^-$ ions 212, $T^-$ ions 214, $V^-$ ions 216, $U^-$ ions 218, $Z^-$ ions 220, and $Y^-$ ions 222 is introduced into the separation chamber 100. A carrier solution 110 comprised of ions $A^+$ 112 and $X^-$ 113, is pumped by pump 114 through the separation chamber 100. The chamber 100 contains a gradient support matrix 217 whose characteristics are such that $S^-, T^-, V^-$, and $U^-$ ions 212, 214, 216, 218, each have equilibrium points at different locations on the gradient, while $Z^-$ and $Y^-$ ions 220, 222 do not. Thus, $S^-, T^-, V^-$ and $U^-$ ions 212, 214, 216, 218 can be collected from their respective equilibrium zones 232, 234, 236, 238, by removal through exit ports 227, 228, 229, 230. For this purpose, a plurality of pumps 252, 254, 256, 258 and the associated conduits are provided, each pump being coupled to the respective exit port. The location of the exit ports relative to each other is not important and thus they may be aligned as depicted in Fig. 2 or may be in a spiral pattern about the exterior of the column. Also the chamber may be pre-equipped with a series of potential ports. Only those ports adjacent equilibrium zones formed are opened, either simultaneously or sequentially. The outlet of each pump 252, 254, 256, 258 is coupled to appropriate downstream equipment, such as a reservoir.

In each of the embodiments of the present invention, it is frequently advantageous to recirculate, as depicted in Fig. 3, the elctrolyte solutions 135, 137 present in reservoirs 134, 136 by means of a pump 204 in order to reduce any effects due to electrolysis. As depicted in Fig. 3, the process is a continuous one in that sample 208 is continuously fed into the system while concentrated $S^-$ ions 212, $T^-$ ions 214, $V^-$ ions 216, and $U^-$ ions 218 are continuously withdrawn. As will be understood by those skilled in the art, for continuous operation the rate of withdrawal of a given ion must be about equal to the rate of accumulation of that ion and each rate of withdrawal must be such as not to interfere with the equilibrium positions. In order to attain rates of withdrawal of ions which approximate the rates of accumulation, sensing means 207, 208, 209, 210, such as thermocouples, spectrophotometers, geiger counters or the like, may be utilized to detect the boundaries of the equilibrium zones 232, 234, 236, 238 and optionally to control pumps 252, 254, 256, 258, and thus the rates of withdrawal.

For example, the presence of the ions in each equilibrium zone will influence the electrical resistance of the solution in the equilibrium zone. Since the rate of heat generation, will increase as the resistance increases ($W = a^2R$ or wattage is equal to the square of the electrical current times the resistance), the temperature of the equilibrium zone will be somewhat different than that at adjacent parts of the separation chamber. Sensing means, such as thermocouples (not depicted) placed on the exterior of the column may be used to detect the temperature discontinuities in order to monitor the positions of the equilibrium zones. As the zone expands in size, the rate of withdrawal is increased and as the zone decreases in size the rate of withdrawal is decreased.

Referring again to Fig. 1, it will be understood that the imbalances in movement due to electrophoresis and movement due to flow will cause the desired ion, $Y^-$, to move toward the boundary of the two compartments. Since the ion $Y^-$ is not normally at equilibrium in either compartment i or compartment ii, an additional factor must be involved in the formation of the equilibrium zone. The additional factor is the concentration of $Y^-$. (The movements of ions within a compartment, $R_e$ and $R_f$, have been described without consideration of the effects of the concentrations of the ions being separated. Although this represents a simplification of the real situation, throughout most of each region the concentrations of the ions being separated are typically too low to have a substantial impact on $R_e$ and $R_f$.) Since the ion being separated, $Y^-$, reaches a high concentration within its equilibrium zone, the rate of movement due to electrophoresis within an equilibrium zone is $R_e' = R_e \cdot f_1(c)$ and the rate of movement due to fluid flow within an equilibrium zone is $R_f' = R_f \cdot f_2(c)$ where $f_1(c)$ and $f_2(c)$ are correction factors which vary as a function of the concentration, c, of the ion forming the equilibrium zone. The correction factors $f_1(c)$ and $f_2(c)$ differ for different ions and for different combinations of separation conditions. As will be understood from the following descriptions $f_1(c)$ and $f_2(c)$ need not be known. They simply serve here as an attempt to explain the behavior of the equilibrium zone.

Consider first the following specific case. Increasing concentrations of $Y^-$ ions cause a decrease in $R_e$, e.g., $f_1(c)=/c$ and $R_e'=R_e \cdot 1/c$. Furthermore, the concentration of $Y^-$ ions has no influence on $R_f$. That is, $f_2(c)=1$ and $R_f'=R_f$. Consider that for $Y^-$ ions, $R_n=R_e-R_f$ is positive in region i ($R_i>0$) and negative in region ii ($R_{ii}<0$) and that region ii is on the electrophoresis side of region i, i.e. contiguous to region i in the direction of electrophoresis. Under these conditions the equilibrium zone is thought to form and behave as follows. Ion $Y^-$ accumulates at the boundary of the two regions and the increasing concentration of $Y^-$ results in a decreased movement due to electrophoresis. When $R_e'$ is reduced to the point where it equals $R_f$ in region i, the equilibrium zone has been established. If the concentration increases further the movement due to flow dominates and $Y^-$ moves into region i, thereby decreasing the concentration of $Y^-$, increasing the size of the zone and reestablishing the equilibrium situation. If the concentration of $Y^-$ were to decrease, $R_e'$ would increase and thus movement due to electrophoresis would dominate which would cause the $Y^-$ ions to move toward the boundary of region i and ii, and once again increase the concentration of $Y^-$ ions and reestablish the equilibrium situation. Thus, it is clear that the equilibrium zone is self-regulating and the ion, $Y^-$, composing that zone is maintained at just that concentration which causes $R_e'$ to counterbalance $R_f'$. When additional $Y^-$ ions are added to the zone, the zone will increase in size and similarly the removal of $Y^-$ ions from the zone will cause it to decrease in size. In this particular case the equilibrium zone will form in region i. One boundary of the equilibrium zone will correspond to the boundary of region i and ii, and the other boundary of the zone will be within region i (its position being determined by the total amount of $Y^-$ which has accumulated in the equilibrium zone).

It should be emphasized that these conditions establish themselves automatically and that an equilibrium zone will be established irrespective of the values of $f_1(c)$ and $f_2(c)$. However, the position of the equilibrium zone will depend on the values of $f_1(c)$ and $f_2(c)$. Although for the instant example one of the boundaries of the equilibrium zone will always correspond with the boundary of regions i and ii, the other boundary of the equilibrium zone may lie in either region i or ii depending on the values of $f_1(c)$ and $f_2(c)$. Consider the following cases wherein for ion $Y^-$, $R_n=R_e-R_f$ is positive in region i ($R_i>0$) and negative in region ii ($R_{ii}<0$) and that region ii is on the electrophoresis side of region i.

Case 1: If increasing concentration of $Y^-$ causes $R_e'$ to increase, then when a certain concentration is reached $R_{ii}$ will become zero. That is, normally $R_{ii}=R_{eii}-R_{fii}$, whereas within an equilibrium zone lying in region ii $R_{ii}'=R_e'-R_f'$ and in this case $R_f'=R_{fii}$. Thus, if $R_e'=R_{fii}$ then within the equilibrium zone $R_{ii}'=R_e'-R_{fii}=0$. This condition develops because $R_{eii}<R_{fii}$ and the increasing concentration of $Y^-$ ions cause $R_e'$ to increase until it equals $R_{fii}$. In contrast, in this particular case $R_i$ cannot become zero because $R_{ei}>R_{fi}$ and increasing the concentration of $Y^-$ ions would only increase $R_i$. Thus, under these conditions the equilibrium zone forms in region ii and one boundary corresponds to the common boundary of region i and region ii.

Case 2: If increasing concentration of $Y^-$ causes $R_f'$ to increase, then when a certain concentration is reached $R_i$ will become zero. Note that in this case $R_{ii}$ cannot become zero but rather becomes more negative. Thus the equilibrium zone will form adjacent to region ii but within region i.

Case 3: If increasing concentration causes $R_f'$ to decrease, then when a certain concentration is reached $R_{ii}$ will become zero and $R_i$ cannot become zero. The equilibrium zone will form adjacent to compartment i but within region ii.

More complicated cases which can exist are those wherein both $R_e$ and $R_f$ are affected, $R_{ei}$ and $R_{eii}$ are affected differently, $R_{fi}$ and $R_{fii}$ are affected differently, or combinations thereof. As will be apparent to those skilled in the art, a quasi equilibrium can be reached in all cases and the concentration of a species in the equilibrium zone will be determined by the separation system characteristics.

As will be apparent to one skilled in the art, a number of different factors could be involved in the influence of concentration on $R_e$ and $R_f$. For example, the ion, $Y^-$, forming an equilibrium zone may alter the electrical conductivity of the equilibrium zone, and thereby influence its own mobility. Alternately, $Y^-$ ions might interact with biospecific sites on one of the matrices, and the high concentration of $Y^-$ ions in the equilibrium zone might saturate these sites and alter both $R_e'$ and $R_f'$.

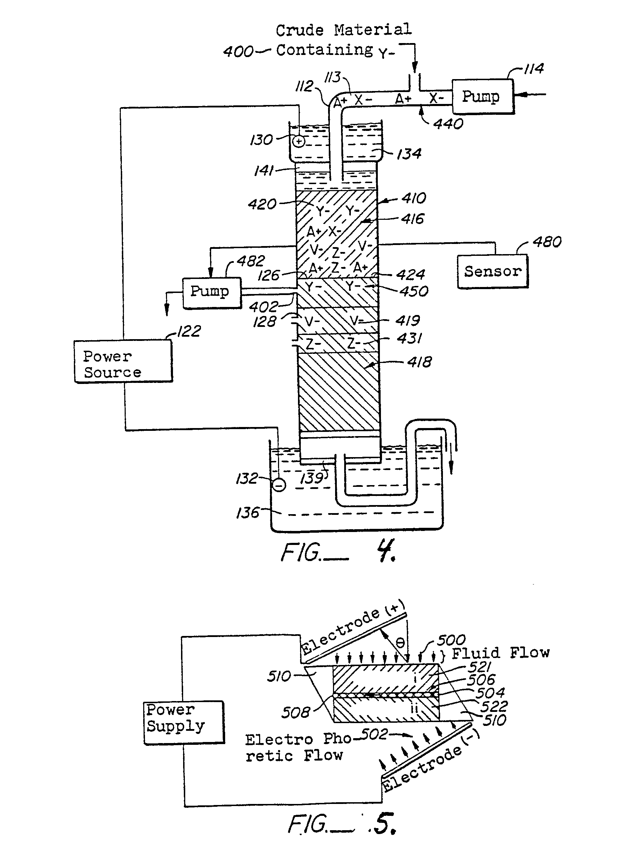

When more than one species of ions satisfies the boundary conditions, $R_i>0$ and $R_{ii}<0$, (as depicted in Fig. 4), all such ions are forced toward the boundary of the two matrices. However, each of the different ion species will typically form a separate or discrete equilibrium zone. This follows from the above described considerations and can be understood as follows. Consider a system in which one ion, $Y^-$, has formed an equilibrium zone where one boundary of the zone coincides with the boundaries of matrices i and ii which form the region of the separation system (e.g. $Y^-$ ions in Fig. 4). Furthermore, in the instant example, matrix ii (416 in Fig. 4) is on the electrophoresis side of matrix i (418 in Fig. 4) and according to principles described $R_i>0$ and $R_{ii}<0$ for ion $Y^-$ whose equilibrium zone lies in matrix i. If a second ion $V^-$ is introduced into this

separation system and if this ion also satisfies the boundary conditions, $R_i > 0$ and $R_{ii} < 0$, then it will be forced toward the boundaries of regions i and ii. However, the net rate of movement of ion $V^-$ will typically be affected by the high concentration of ion $Y^-$ in the existing equilibrium zone. Thus, assume the net rate of movement of ion $V^-$ within the equilibrium zone of $Y^-$ (designated $R_n'$) is less than 0. Thus, $R_i > 0$ while $R_n'$ and $R_{ii}$ are less than zero and $V^-$ would concentrate at the boundary of the equilibrium zone for $Y^-$ ions and the remainder of region i. Following the principles described above, ion $V^-$ would then form its own equilibrium zone in this position (Fig. 4). Similarly, if a third ion species, $Z^-$, were introduced into the separation system, it would typically form a third discrete equilibrium zone if it satisfies the boundary conditions, $R_i > 0$ and $R_{ii} < 0$. Additionally, if the net rate of movement of $Z^-$ ions within the equilibrium zone of $Y^-$, $R_n'$, is less than zero and similarly the net rate of movement of $Z^-$ ions within the equilibrium zone of $V^-$, $R_n''$, is also less than zero, then $Z^-$ ions will form an equilibrium zone between the equilibrium zone of $V^-$ ions and the remainder of region i (Fig. 4). That is, since $R_{ii}$, $R_n'$ and $R_n'' < 0$, $V^-$ ions will migrate in the direction of flow whereas since $R_i > 0$ it will migrate in the direction of electrophoresis in region i and thus be forced to this equilibrium position. To one skilled in the art it will be obvious that this condition of multiple discrete boundaries will form automatically and does not require that the different ions species be introduced sequentially.

Referring again to Fig. 4, crude material 400 containing $Y^-$ ions 420 to be purified is fed into the separation chamber 410 with the flowing carrier fluid 440. Port(s) 402 are attached to the separation column just below the boundary 424 of the two matrices 416, 418 (below assuming that the equilibrium zone will form in the lower region under other conditions the port would be positioned above the boundary) and both fluid 440 and the purified $Y^-$ ions 420 can be withdrawn from the equilibrium zone 450, provided only that the following requirements are satisfied: (a) either the $Y^-$ ion 420 of interest must be the only component which comes to equilibrium in the separation system or if several ions, i.e. $Y^-$ ions 420, $V^-$ ions 419, and $Z^-$ ions 431, come to equilibrium, $Y^-$ ions 420 must form the first equilibrium zone (the one bordering on the boundary 424 of the two matrices 416, 418) so that the position of this zone will not change with time or if the ion of interest forms an equilibrium zone whose boundary is defined by another equilibrium zone, i.e. $V^-$ ions 419, $X^-$ ions must be withdrawn at a rate corresponding to their rate of accumulation so that the position of the equilibrium zone of the desired ion remains constant; and (b) the rate of carrier fluid 440 withdrawal from the port 402 must not perturb the fluid flow 440 through the separation chamber 100 to an extent which would destroy the equilibrium force. Furthermore, the rate of withdrawal of material at the port 402 must substantially match the rate of accumulation of the desired $Y^-$ ion 420 in the equilibrium zone 450 if maximum purification and recovery are required (this can easily be accomplished since the zone 450 can be detected by one or more sensing means 480 which regulates the withdrawal from the ports by control of the withdrawing pump 482).

Another embodiment of the present invention illustrated in Figs. 5, 6 and 7 provides for, and is particularly useful in those applications which require high purification factors. In this design, the flow force (and thus the movement of the desired ions due to flow) and the electrophoretic force (and thus the movement due to electrophoresis) do not directly oppose each other but are at an oblique angle relative to each other. This is shown schematically in Fig. 5, where the direction of the electric field 502 is at an angle, $\theta$, to the direction of fluid flow 500. The electric field of magnitude $V$ can be considered to be composed of two vectors. One of these would have a magnitude of $\cos \theta \cdot V$ and would directly oppose the movement due to fluid flow and the other vector would have a magnitude of $\sin \theta \cdot V$ and would act in the direction at right angles to the direction of fluid flow. If the rates of net movement, $R_i$ and $R_{ii}$, in the two region 521, 522 are only considered in the direction parallel to the direction of fluid flow then the only relevant voltage field is that which is in parallel with this direction of flow. An appropriate electric force, $V$, would generate a value of $\cos \theta \cdot V$ such that for a particular ion species, $Y^-$, $R_i < 0$ and $R_{ii} > 0$. Thus, $Y^-$ ions will be forced toward the boundary of the two regions 521, 522 and will form an equilibrium zone 506. Although $Y^-$ ions in the equilibrium zone will have no substantial movement in the direction defined by the direction of fluid flow, these ions will be influenced by the other vector of the electric field, $\sin \theta \cdot V$, and will migrate laterally from the position of the inlet port 504 to the position of the outlet port 508. In order to avoid distortions in the electric field or the pattern of fluid flow, this design incorporates a wedge 510 on each side of the separation chamber composed of a third matrix which resists fluid flow but which allows ions to move under the influence of a voltage gradient.

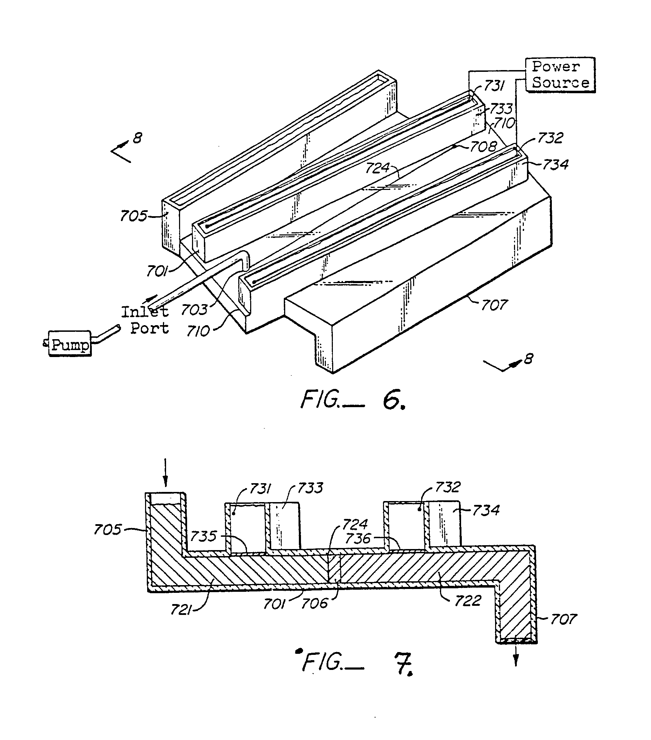

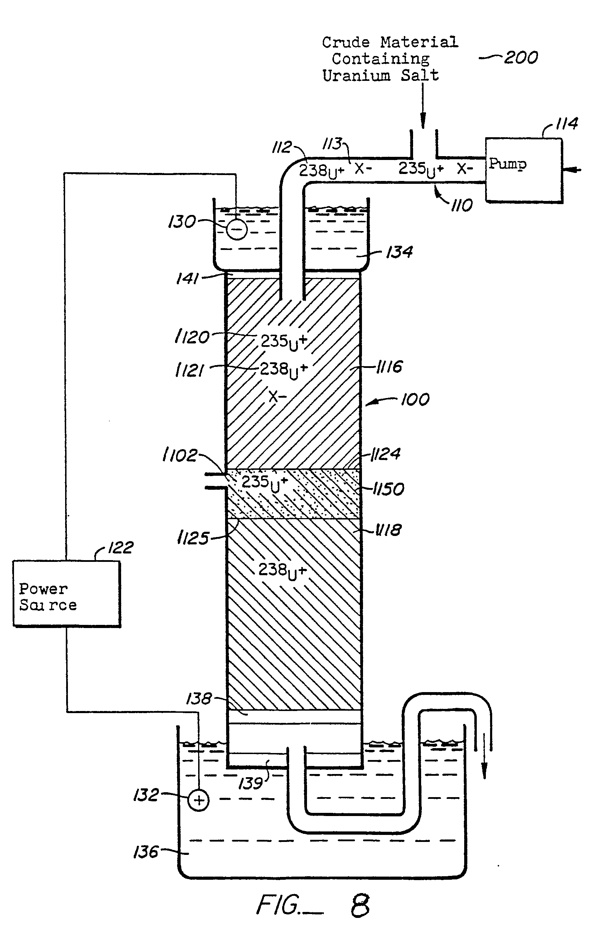

Figs. 6 and 7 illustrate one embodiment of an apparatus for combining lateral movement and dynamic equilibrium electrophoresis. Carrier fluid enters through an entry trough 705 and flows through a separation chamber having longitudinally varying medium characteristics exiting through an exit trough 707. The crude material is fed in on one side of the separation chamber 701 at the entry port 703 and an equilibrium zone 706 is formed at the boundary 724 of the two matrices, matrix i 721 and matrix ii 722. However, the ions move laterally along the equilibrium zone 706 because the movements of the ion due to electrophoresis and flow cancel out only along the longitudinal direction or axis and a residual lateral force remains along the other lateral axis. Thus, the purified material can be collected from an exit port 708 at the boundary 724 of the two matrices but positioned on the side of separation chamber opposite the input port 703. Typically a third matrix iii 710 or other material which resists fluid flow but which allows ions to move under the influence of a voltage gradient will be positioned along the lateral sides of the separation chamber. In this embodiment electrodes 731, 732 are placed in long electrode reservoirs 733, 734 which are parallel with each other but at an angle to the entry and exit troughs 705, 707. The electrode reservoirs 733, 734 are connected to the separation chamber 701 by membranes 735, 736 which resist fluid flow but allow electric current to pass.

Fig. 7 is a cross-sectional view of the apparatus of Fig. 6 taken along line 8—8.

In all of the embodiments described above, the longitudinal variation in separation characteristics is produced by the presence of one or more matrices.

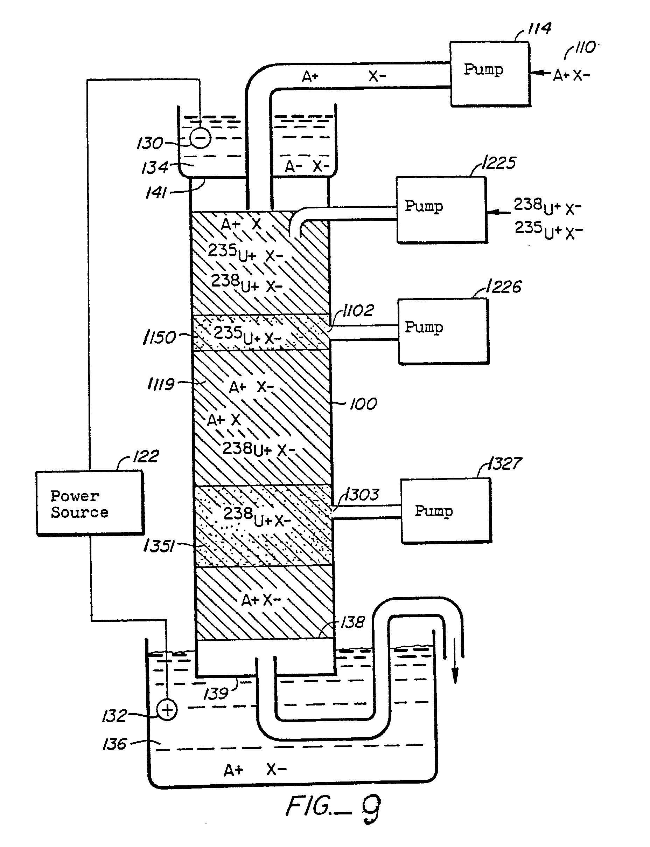

Fig. 8 depicts one embodiment of the present invention in which two different matrices 1116, 1118 are utilized in the separation chamber 100 to produce equilibrium. A carrier solution 110 pumped by a pump 114 flows down through a first support matrix 1116 of type i then through a second support matrix 1118 of type ii. The matrices i, ii are selected for their differing influence on either the electrophoresis rate or flow rate of uranium ions 1120, i.e. $k_e/k_f$ for matrix i is not the same as $k_e/k_f$ for matrix ii. For example, if $k_e$ and Ce are the same for matrix i and ii, and $k_f$ for matrix i ($k_{fi}$) was twice $k_f$ for matrix ii ($k_{fii}$), then the electrophoresis rate ($R_e$) of $^{235}U^+$ ion 1120 will be the same in matrix i 1116 and the matrix ii 1118 ($a \cdot r \cdot 1 A \cdot Ce_i \cdot Me \cdot k_{ei} = a \cdot r \cdot 1/A \cdot Ce_{ii} \cdot Me \cdot k_{eii}$). However, the flow mobility ($R_f$) of $^{235}U^+$ ion 1120 will be twice as great in matrix i as in matrix ii ($dv/dt \cdot 1/A \cdot kf_i = dv/dt \cdot 1/A \cdot 2 \times k_{fii}$). That is, even though the carrier fluid 110 is flowing at the same rate ($dv/dt \cdot 1/A$) in matrix i 1116 and matrix ii 1118, the $^{235}U^+$ ion 120 flows at twice the rate in matrix i 1116 as it does in matrix ii 1118 ($R_{fi} = 2 \cdot R_{fii}$). Thus, when a voltage of a particular magnitude is applied by a power source 122 such that the electrophoresis rate ($R_f$) for $^{235}U^+$ ion 1120 is less than $R_{fi}$ but greater than $R_{fii}$ ($R_{fi} > a \cdot r \cdot 1/A \cdot Ce \cdot Me \cdot k_e > R_{ii}$), then the electrophoresis rate of the $^{235}U^+$ ion 1120 and the flow rate of the $^{235}U^+$ ions 1120 are imbalanced in both support matrix i 1116 and the matrix ii 1118. In matrix i 1116 the flow rate dominates, i.e., the ratio of the magnitudes of $R_{fi}$ to $R_{ei}$ is greater than 1, and the net rate of movement in compartment i, $R_i$, will be $R_{ei} - R_{fi}$ where movement in the direction of electrophoresis is defined as positive. In matrix ii 1118 the electrophoresis rate dominates, i.e. the ratio of $R_{fii}$ to $R_{eii}$ is less than 1, and the net rate of movement in compartment ii, $R_{ii}$, will be $R_{eii} - R_{fii}$. Thus, the $^{235}U^+$ ions 1120 concentrate at the boundary 1124 of the two matrices 1116, 1118 and are not able to diffuse away because the described forces return the $^{235}U^+$ ions 1120 to the boundary 1124. The only ions which will concentrate at the boundary are those which satisfy the inequality, $R_{fi} > R_e > R_{fii}$.

Typically, because their electrophoretic mobilities are so similar, $^{235}U^+$ and $^{238}U^+$ ions will satisfy the inequality under very similar conditions. Thus, it would be difficult to select conditions where only $^{235}U^+$ ions would concentrate at the boundary of the two matrices. Nonetheless, these two isotopic forms can be separated according to the present invention because they will form distinct equilibrium zones adjacent the boundary of the two compartments. By compartment is meant a portion or region of the separation chamber in which a particular species of ion has a unique ratio of its movement due to flow and movement due to electrophoresis under particular conditions, e.g. when the electric field, rate of carrier fluid flow and composition of the carrier fluid are constant and where ions other than those of the carrier fluid are at an insignificant concentration. In this example the regions correspond to the regions of the separation chamber occupied by matrix i and matrix ii. The formation of distinct equilibrium zones is explained as follows.

Since the ions under consideration, $U^+$ ions, are not at equilibrium in either regions i or region ii, an additional factor must be involved in the formation of the equilibrium zone. The additional factor is the concentration of the $U^+$ ions. The $U^+$ ions will migrate toward the boundary of regions i and ii. First, considering only $^{235}U^+$ ions, as the concentration of $^{235}U^+$ ions increases at the boundary, $R_e$ and $R_f$ will be affected such that $R_e' = R_e \cdot f_1(c)$ and $R_f' = R_f \cdot f_2(c)$ where $R_e'$ is the rate of movement due to electrophoresis when influenced by the concentration of $^{235}U^+$ ions, $R_f'$ is the rate of movement due to flow when influenced by the concentration of $^{235}U^+$ ions, and $f_1(c)$ and $f_2(c)$ are correction factors which vary as a function of the concentration, c, of the ion forming the equilibrium zone, $^{235}U^+$. Consider the following specific case: Increasing concentrations of $^{235}U^+$ ions cause $R_e'$ to decrease but have no effect on $R_f'$, e.g. $R_e' = R_e \cdot 1/c$ and $R_f' = R_f \cdot 1$. Thus, as $^{235}U^+$ ions accumulate at the boundary of the two regions $R_e'$ will decrease until it equals $R_{fii}$ and will thereby establish an equilibrium zone where one of the boundaries of the zone correspond to the boundary of regions i and ii and the other boundary lies within region ii. The position of the boundary within region ii, and thus the size of the zone, depends on the amount of $^{235}U^+$ ions in the equilibrium zone. That is, if the amount of $^{235}U^-$ ions were to decrease, then the concentration, c, would decrease and $R_e'$ would increase which would force the $^{235}U^+$ ions toward the boundary of regions i and ii, thereby concentrating the $^{235}U^+$ ions and reestablishing an equilibrium zone. Similarly an increase in $^{235}U^+$ ions would cause $R_e'$ to decrease so the movement due to flow ($R_{fii}$) would dominate and $^{235}U^+$ ions would move further into compartment ii to establish a larger equilibrium zone where, once again, $R_e'=R_{fii}$. Thus, it is clear that the equilibrium zone is self-regulating and the concentration of $^{235}U^+$ ions is maintained at just that level which causes $R_e'$ to counterbalance $R_{fii}$. It will be understood that the values of $f_1(c)$ and $f_2(c)$ will differ for different separation conditions and different ions. However, the values of $f_1(c)$ and $f_2(c)$ do not have to be known; an equilibrium zone will form in all cases except for the unlikely case where $f_1(c)\equiv f_2(c)$. It will be apparent to one skilled in the art that an equilibrium zone abutting the boundary of region i or ii can lie in either region i or ii and that this will be determined by the values of $f_1(c)$ and $f_2(c)$ and the particular conditions.

Returning now to the explanation of why $^{235}U^+$ ions and $^{238}U^+$ ions will form distinct equilibrium zones, consider the behavior of $^{238}U^+$ ions in the above described example where $^{235}U^+$ ions are trapped in an equilibrium zone bordering region i and ii but lying in region ii. For the instant example $^{238}U^+$ ions are also assumed to satisfy the inequality $R_{fi}>R_e>R_{fii}$ and thus should form an equilibrium zone. However, note that since $R_e$ for $^{238}U^+$ ions is less than $R_e$ for $^{235}U^+$ ions, the $^{238}U^+$ ions will not be at equilibrium within the equilibrium zone for $^{235}U^+$ ions. Within the equilibrium zone of $^{235}U^+$ ions, the rate of movement of $^{238}U^+$ ions due to electrophoresis will be about $0.99 \cdot R_e'$ and thus the $^{238}U^+$ ions will be forced to a position between the equilibrium zone of $^{235}U^-$ ions and the remainder of ii. Furthermore, as described for the equilibrium zone for $^{235}U^+$ ions, $^{238}U^+$ ions will form a second equilibrium zone in which the concentration of $^{238}U^+$ ions will be automatically regulated so that the rate of movement due to electrophoresis precisely counterbalances their movement due to flow. Since the $^{238}U^+$ ions are the more abundant ions, continued addition of uranium salts to the separation system will lead to an expansion of the equilibrium zone of $^{238}U^+$ ions until this equilibrium zone fills that part of region ii not occupied by the equilibrium zone of $^{235}U^+$ ions (Fig. 8) at which point additional $^{238}U^+$ ions will be eluted with the fluid flowing from the separation system. Thus, in effect, $^{235}U^+$ ions will be the only ions concentrating adjacent the boundary of regions i and ii and the $^{235}U^+$ enriched material can be collected from this position of the separation chamber.

Although the present invention is described in terms of the separation of uranium isotopes it will be known and understood by those skilled in the art that the descriptions herein provided are equally applicable to all other isotopes, e.g. hydrogen and deuterium, isotopes of carbon, sulfur, chlorine, oxygen, and the like.

For purposes of any of the embodiments of the present invention any one of a large number of commercially available electrical power sources 122 having a stable direct current output can be used. The voltage V applied to the system is chosen as dicated by separation requirements.

That is, the voltage gradient dV/dD is directly proportional to the applied voltage or applied current. Thus, by equation 1, the movement due to electrophoresis is proportional to the input voltage or input current. Means for applying the voltage are those known in the art, such as those described in U.S. Pat. No. 3,737,758.

The electrodes 130, 132 are typically isolated from the separation chamber 100 by having the electrodes contact the solution in reservoirs 134, 136 which are connected to the separation chamber 100 by liquid contacts 139, 141, e.g. a membrane barrier or matrix (different from the support matrices discussed above) which resists fluid flow but does not resist the electric current flow through the solution.

Similarly any pump 114 capable of maintaining a constant output may be utilized to pump the fluid 110 through the separation chamber 100. The pumping rate chosen is as dictated by the separation requirements. That is, the flow rate (equation 2) is proportional to the pumping rate which can be selected to give the desired equilibrium.

The separation chamber 100 can be of almost any form as demanded by the particular separation technique. The material contacting the solution is typically a non-conductor of electricity. The chamber is usually closed, except for exit and input ports 102, and impermeable to the solution so that constant fluid flow can be maintained. A preferred separation chamber is a vertical cylindrical chamber (column), typically glass or suitable plastic, in which the fluid flows in the downward direction and electrophoresis drives the desired molecules in the upward direction. A mesh on the bottom 138 of such a column supports the matrices which fill the cavity of the column. Port 102 can be included to permit withdrawal of the purified $^{235}U^+$ ions 120 from the equilibrium point.

A wide range of support matrices have been developed for use in liquid chromatographic procedures. These same matrices can be used in the procedures of the present invention. Some of these matrices may have a different effect on the mobility of ions of interest driven by flow than they have on the electrophoretic mobility of these molecules and theoretical considerations indicate that virtually all such matrices will have the desired differential influence on mobilities. Because of the variety of such matrices, and the variety of their modes of interaction with particular molecules, it is possible, as will be known and understood by those skilled in the art, to separate ions on the basis of virtually any chemical/physical property (e.g., molecular size, ionic character, hydrophobicity, and electrophoretic mobility), by selecting the right matrices.

A preferred embodiment of the present invention for large scale applications is a continuous flow process. By continuous flow process is meant a process wherein the impure raw material is fed into the system continuously and the purified product removed continuously.

Accordingly, the present invention provides a simple means of operating separation as a continuous flow process. As shown in Fig. 8, the crude material containing uranium salt 200 is fed into the separation chamber 100 with the flowing solvent 110. Port 1102 is disposed on the separation column just below the common boundary 1124 of the two matrices 1116, 1118 (below if flow is down through matrix i first and then matrix ii, electrophoresis is up, and the $R_f:R_e$ is greater than 1 in matrix i and less than 1 in matrix ii) and both carrier fluid 110 and the purified $^{235}U^+$ ions 1120 can be withdrawn from the equilibrium zone 1150, provided only that the following requirements be satisfied: a) either the $^{235}U^+$ ions 1120 of interest must be the only component which comes to equilibrium in the separation system or if several ions come to equilibrium, it must form the first equilibrium zone (the one bordering on the common boundary 1124 of the two matrices 1116, 1118) so that its position will not change with time, b) the rate of fluid 110 withdrawal from the port 1102 must not perturb the flow through the separation chamber 100 to an extent which would destroy the equilibrium force. This design offers high capacity and efficient use of power.

The embodiment shown in Fig. 8 may be modified to include a) the incorporation of sensors to regulate the rate of input of crude material and withdrawal of purified product; b) a method of inputting the crude material which would avoid any loss to the electrode reservoirs, and c) elimination of carrier ions from the separation chamber so that the efficiency of utilization of electric power would be increased.

Fig. 9 depicts another embodiment which utilizes a gradient matrix in the separation chamber to produce multiple compartments each differing in separation characteristics, e.g. $R_e/R_f$ for a particular ion would vary through the separation chamber. Typically a gradient matrix would be produced by mixing in different proportions two matrices with differing characteristics. In this process two different ions might satisfy the boundary conditions and form equilibrium zones, but these equilibrium zones could occupy different regions of the separation chamber and are unlikely to be contiguous. In Fig. 9 a carrier fluid 110 containing carrier ions $A^+$ and $X^-$ is pumped by pump 114 into the separation chamber 100 which is filled with a gradient matrix 1119. The power supply 122 imposes a voltage across the separation chamber 100 such that the positively charged (in this instant example) ions electrophorese in the direction counter to the fluid flow. The ions to be separated $^{235}U^+$ and $^{238}U^+$ are fed into the separation chamber 100 by pump 1225. In those areas of the column where electrophoresis dominates the particular ions will move in the direction of electrophoresis while in those regions where flow dominates they will move in the direction of flow and for those ions which satisfy the boundary conditions the ions will concentrate in that region of the separation chamber where the rates of movement due to flow and electrophoresis are balanced. Because a multitude of regions exist in the gradient matrix even ions with very similar mobilities can form separate equilibrium zones 1150, 1351. If desired the different ions can be removed from their respective equilibrium zones. Accordingly, pump 1226 can remove a solution rich in $^{235}U^+$ ions via port 1102 from equilibrium·zone 1150. Similarly, pump 1327 can remove a solution rich in $^{238}U^+$ ions via port 1303 from equilibrium zone 1351. This process could be useful when high purification ratios are needed.

A wide range of support matrices has been developed for use in liquid chromatographic procedures. These same matrices can be used in the procedure of the present invention. Virtually all of these matrices may have a different effect on the movement of ions due to flow than they have on the movement due to electrophoresis of the same ions and will therefore be useful in the process of the present invention. Because of the variety of such matrices, and the variety of their modes of interaction with particular ions, it is possible, as will be known and understood by those skilled in the art, to separate ions on the basis of virtually any chemical/physical property (e.g., molecular size, ionic character, hydrophobicity, and electrophoretic mobility), by selecting the right matrices. Typical of such matrices are polyacrylamide gels, cellulose, agarose, copolymers of acrylic and methacrylic acids and the like, with or without charged functionalities such as diethyl amino ethyl (DEAE) and carboxy methyl (CM).

Other embodiments of the present invention relate to continuous purification or enrichment processes suited to industrial scale applications. By a continuous flow process is meant a process in which the impure raw material is fed into the system continuously and the purified product is removed continuously. In carrying out the present method, a number of alternative configurations and processes are available. General designs by which the process of the present invention can be used as a continuous flow process are as shown in Figs. 3—8. The process of the present invention, in addition to isotope separation, was utilized for the following specific applications:

1) Protein purification

The process of the present invention was utilized for its capacity to resolve proteins. The high resolution of the system allowed for separation of proteins which differ by less than 1% in their electrophoretic mobility or degree of interaction with the gel permeation matrices used in the separation chamber. Other matrices such as ion exchange resins, hydrophobic affinity resins, absorption resins, and specific affinity resins, can also be used. The number of adjustable parameters are sufficient to allow the procedure to be used for the purification of nucleic acids, proteins, antibodies, antigens, haptens, and hormones, e.g. the purification of

**0 031 565**

interferon, useful for treatment of viral diseases and the isolation of peptide hormones.

2) Purification of antibiotics

Most antibiotics contain a number of amino acids in their structures and can be anticipated to behave somewhat like very small proteins in the described separation procedure. Thus, the process is useful for drug purification and provides an economical method for purifying antibiotics which are made in low amounts and/or are difficult to separate from contaminants.

Separation of colored protein, ferritin, was carried out utilizing a carrier buffer solution of 10 mM Tris Acetate, pH 7.4, a 50 cm long vertical glass column with an internal diameter of 7 mm as a separation chamber and commercial gel permeation matrices (agarose A 50 m and Biogel P-10® available from Bio-Rad Laboratories, Richmond, California). Matrix i, the Biogel P-10, was layered above a zone of matrix ii, the agarose A 50 m. The flow direction was downward while the electrophoresis direction was upward (since the protein, ferritin, is negatively charged, the positive electrode was at the top of the column in order to impart an upward electrophoretic motion to the protein). Equilibrium was obtained at an applied voltage of 600 V and a flow rate of 40 ml/hr. Under these conditions, 10 mg of added ferritin was concentrated into a narrow band about 2 mm wide. The protein zone remained stable in this position, but as expected, small adjustments of the applied voltage or flow caused the protein to be displaced from the equilibrium position.

Resolution was tested by first determining whether the ferritin could be separated from the other colored proteins. Secondly, the smallest change in applied voltage which would shift the position of myoglobin in the separation chamber was determined. A high resolution of separation between ferritin and other proteins was observed. In fact, hemoglobin, myoglobin, and cytochrome *c*, would not achieve equilibrium under the same conditions as those which forced ferritin to an equilibrium position. As a result, the other proteins ran off the column. However, using other voltage and flow settings, equilibrium conditions for these other proteins were defined. To give a measure of degree of resolution of these proteins, the equilibrium conditions for each protein are compared. Since both flow and applied voltage are adjusted to achieve these eqilibrium conditions, and it is their ratio which defines the equilibrium conditions, the ratios for different proteins provide a comparison. In arbitrary units, the equilibrium ratios were ferritin 6.7, hemoglobin 32, and myoglobin 56 (the cytochrome *c* required an alteration in electrical polarity). Ferritin was brought to equilibrium between a boundary between two matrices (matrix i, Biogel P-300®; matrix ii, mixture consisting of 80% Biogel P-300 and 20% Agarose A 5 m) and the applied voltage was changed until the protein shifted from equilibrium. The minimal voltage change required to shift the ferritin corresponded to a change in the equilibrium ratio of 3%. On the basis of these measurements, it can be seen that the process of the present invention equals or surpasses other known separation procedures in terms of resolution of proteins. Furthermore, even the small scale apparatus utilized herein has a capacity approaching 1 gm of purified protein, which equals or exceeds the capacity of other known methods of separation.

**Claims**

1. A method of segregating at least one species of desired ions from a mixture of ionic species comprising the steps of:
   introducing said mixture into a separation chamber having longitudinally varying separation characteristics provided by either (a) a gradient matrix having continuously varying medium characteristics or (b) a series of at least two contiguous matrices each of uniform medium characteristics but differing with respect to each other;
   imparting to said mixture a movement in a first direction by flowing a carrier fluid through said chamber; and
   applying an electrical field across said chamber to electrophorese said desired ions in a second direction having a component counter to said first direction to segregate each of said species of desired ions in an equilibrium zone, at least one such zone abutting the common boundary of said matrices when contiguous matrices of uniform characteristics are present.

2. A method according to claim 1 further comprising providing in said chamber regions having matrices of differing electrical resistances.

3. A method according to claim 1 further comprising providing in said chamber a matrix having a gradient of electrical resistance.

4. A method according to any one of claims 1—3, further comprising the step of removing one or more of said species from the equilibrium zone of said species.

5. A method according to any one of claims 1—3, wherein said introducing step is continuous.

6. A method according to claim 4 wherein either or both of said introducing and said removing steps are continuous.

7. A method according to claim 4 wherein said introducing and said removing steps are intermittent.

8. A method according to any one of claims 1—4, further comprising the steps of:
   terminating said step of applying after each of said species is segregated;
   allowing said species to move through said chamber due to said flowing carrier fluid; and
   collecting said species by collecting means.

9. A method according to any of claims 1—8, further comprising the step of detecting said zones by detection means.

10. A method according to any one of claims 1—9, wherein said second direction is at an acute angle to said first direction whereby said equilibrium zones have lateral movement.

11. A method according to claim 10, further comprising the step of removing said species from a port disposed adjacent said at least one equilibrium zone in the direction of said lateral movement.

12. A method according to any one of claims 1—11 wherein said matrix or series of matrices retards ions in relation to their size and/or has ionic interactions with ions.

13. A method according to any one of claims 1—12, wherein said matrix or series of matrices is a specific affinity resin, especially an adsorption resin.

14. A method according to any one of claims 1—13, wherein said species of desired ions is a mixture of isotopic species.

15. A method according to any one of claims 1—14, wherein at least one of the isotopes is uranyl-235$^+$ or deuterium.

16. A method according to any one of claims 1—13, wherein said species of desired ions is positively charged $^{235}$U ions and said mixture is comprised of positively charged $^{235}$U and $^{238}$U ions.

**Patentansprüche**

1. Verfahren zum Segregieren (Abtrennen) mindestens einer Art von erwünschten Ionen von einer Mischung von Ionenarten, das die folgenden Stufen umfaßt:

Einführung der Mischung in eine Trennkammer mit in Längsrichtung sich ändernden Trenneigenschaften, hervorgerufen durch entweder (a) eine Gradientenmatrix mit sich kontinuierlich ändernden Mediumeigenschaften oder (b) eine Reihe von mindestens zwei benachbarten Matrices mit jeweils einheitlichen Mediumeigenschaften, die sich jedoch voneinander unterscheiden;

Inbewegungsetzen der Mischung in einer ersten Richtung durch Hindurchfließenlassen eines Trägerfluids durch die Kammer; und

Anlegen eines elektrischen Feldes an die Kammer, um die gewünschten Ionen in einer zweiten Richtung mit einer Komponente, die der ersten Richtung entgegengesetzt ist, elektrophoretisch wandern zu lassen, um jede der Arten der gewünschten Ionen in einer Gleichgewichtszone zu segregieren (abzutrennen), wobei mindestens eine derartige Zone an die gemeinsame Grenzfläche der Matrices angrenzt, wenn benachbarte Matrices mit einheitlichen Eigenschaften vorliegen.

2. Verfahren nach Anspruch 1, bei dem ferner in der Kammer Bereiche mit Matrices mit unterschiedlichen elektrischen Widerständen vorgesehen sind.

3. Verfahren nach Anspruch 1, bei dem ferner in der Kammer eine Matrix mit einem Gradienten des elektrischen Widerstands vorgesehen ist.

4. Verfahren nach einem der Ansprüche 1 bis 3, das ferner die Stufe der Entfernung einer oder mehrerer der Ionenarten aus der Gleichgewichtszone der Ionenarten umfaßt.

5. Verfahren nach einem der Ansprüche 1 bis 3, worin die Einführungsstufe kontinuierlich ist.

6. Verfahren nach Anspruch 4, worin entweder die Einführungsstufe oder die Entfernungsstufe oder beide kontinuierlich sind.

7. Verfahren nach Anspruch 4, worin die Einführungsund Entfernungsstufe intermittierend sind.

8. Verfahren nach einem der Ansprüche 1 bis 4, das ferner die folgenden Stufen umfaß:

Beendigung des Anlegens eines elektrischen Feldes, nachdem jede der Ionenarten segregiert (abgetrennt) ist;

Hindurchwandernlassen der Ionenarten durch die Kammer unter dem Einfluß des fließenden Trägerfluids; und Sammeln der Ionenarten mittels einer Sammeleinrichtung.

9. Verfahren nach einem der Ansprüche 1 bis 8, das ferner die Stufe des Nachweises der Zonen durch eine Detektoreinrichtung umfaßt.

10. Verfahren nach einem der Ansprüche 1 bis 9, worin die zweite Richtung unter einem spitzen Winkel zu der ersten Richtung verläuft, wodurch die Gleichewichtszonen eine seitliche Bewegung haben.

11. Verfahren nach Anspruch 10, das ferner die Stufe der Entfernung der Ionenart aus einer Öffnung umfaßt, die angeordnet ist benachbart zu der mindestens einen Gleichgewichtszone in Richtung der seitlichen Bewegung.

12. Verfahren nach einem der Ansprüche 1 bis 11, worin die Matrix oder Reihe von Matrices die Ionen in Abhängigkeit von ihrer Größe zurückhalten und/oder ionische Wechselwirkungen mit den Ionen aufweisen.

13. Verfahren nach einem der Ansprüche 1 bis 12, worin die Matrix oder die Reihe von Matrices aus einem spezifischen Affinitätsharz, insbesondere einem Adsorptionsharz, besteht.

14. Verfahren nach einem der Ansprüche 1 bis 13, worin die Art der gewünschten Ionen eine Mischung von Isotopenarten ist.

15. Verfahren nach einem der Ansprüche 1 bis 14, worin mindestens eines der Isotope Uranyl 235$^+$ oder Deuterium ist.

16. Verfahren nach einem der Ansrpüche 1 bis 13, worin die Art gewünschten Ionen positiv geladene $^{235}$U-Ionen sind und die Mischung aus positiv geladenen $^{235}$U-Ionen und $^{238}$U-Ionen besteht.

**Revendications**

1. Procédé pour isoler au moins une espèce d'ions donnés à partir d'un mélange d'espèces d'ions, comprenant les étapes consistant à:

introduire ledit mélange dans une chambre de séparation ayant des caractéristiques de séparation variant dans le sens longitudinal et fournies par (a) une matrice à gradient ayant des caractéristiques de milieu variant continuellement, ou (b) une série d'au moins deux matrices continues ayant chacune des caractéristiques uniformes de milieu mais qui diffèrent l'une par rapport à l'autre;

conférer audit mélange un mouvement dans une première direction en faisant traverser ladite chambre par un véhicule fluide; et

appliquer un champ électrique dans ladite chambre pour effectuer l'électrophorèse de ces ions donnés dans une seconde direction ayant une composante en sens inverse de ladite première direction, pour isoler chacune desdites espèces d'ions donnés dans une zone d'équilibre, l'une au moins de ces zones touchant la limite commune desdites matrices quand des matrices contiguës à caractéristiques uniformes sont présentes.

2. Procédé selon la revendication 1, comprenant en outre la réalisation, dans ladite chambre, de régions ayant des matrices présentant des résistances électriques différentes.

3. Procédé selon la revendication 1, comprenant en outre la présence, dans ladite chambre, d'une matrice présentant un gradient de résistance électrique.

4. Procédé selon l'une quelconque des revendications 1 à 3, comprenant en outre l'étape consistant à enlever une ou plusieurs desdites espèces de la zone d'équilibre desdites espèces.

5. Procédé selon l'une quelconque des revendications 1 à 3, dans lequel ladite étape d'introduction est continue.

6. Procédé selon la revendication 4, dans lequel l'une desdites étapes d'introduction et d'enlèvement, ou les deux, est ou sont continues.

7. Procédé selon la revendication 4, dans lequel lesdites étapes d'introduction et d'enlèvement sont intermittentes.

8. Procédé selon l'une quelconque des revendications 1 à 4, comprenant en outre les étapes consistant à:

arrêter ladite étape d'application après isolement de chacune desdites espèces;

laisser ladite espèce se déplacer dans ladite chambre sous l'effet de l'écoulement du fluide porteur; et

collecter ladite espèce par des moyens de collecte.

9. Procédé selon l'une quelconque des revendications 1 à 8, comprenant en outre l'étape consistant à déceler lesdites zones par des moyens de détection.

10. Procédé selon l'une quelconque des revendications 1 à 9, dans lequel ladite seconde direction forme un angle aigu avec ladite première direction, de sorte que lesdites zones d'équilibre ont un mouvement latéral.

11. Procédé selon la revendication 10, comprenant en outre l'étape consistant à enlever ladite espèce d'un orifice disposé près d'au moins l'une desdites zones d'équilibre dans le sens dudit mouvement latéral.

12. Procédé selon l'une quelconque des revendications 1 à 11, dans lequel ladite matrice ou série de matrices retarde les ions en fonction de leur taille et/ou exerce des interactions ioniques avec les ions.

13. Procédé selon l'une quelconque des revendications 1 à 12, dans lequel ladite matrice ou série de matrices est une résine à affinité spécifique, notamment une résine d'adsorption.

14. Procédé selon l'une quelconque des revendications 1 à 13, dans lequel ladite espèce d'ions donnée est un mélange d'espèces isotopes.

15. Procédé selon l'une quelconque des revendications 1 à 14, dans lequel au moins l'un des isotopes est l'uranyle-235$^+$ ou le deutérium.

16. Procédé selon l'une quelconque des revendications 1 à 13, dans lequel ladite espèce d'ions donnés est constituée par des ions $^{235}U$ à charge positive, et ledit mélange est constitué d'ions $^{235}U$ et $^{238}U$ à charge positive.

FIG.__I.

FIG.__IA.

Crude Material ⌐200
Containing Y-

FIG._2.

FIG._3.

FIG. 4.

FIG. 5.

FIG.__ 6.

FIG.__ 7.

Crude Material
Containing
Uranium Salt

FIG._ 8

FIG._ 9